# EUROPEAN PATENT APPLICATION

(11) **EP 4 763 616 A1**
(43) Date of publication of application: **24.06.2026**
(21) Application number: 25193287.7
(22) Date of filing: 31.07.2025
(51) Int. Cl.: B60Q 1/00, B62J 6/026

(54) **LAMP BODY**

(30) Priority: 19.12.2024 JP 2024223826
(71) Applicant: Honda Motor Co., Ltd., Toyko 105-8404 (JP)
(72) Inventor: SOETA, Ryuhei, Tokyo, 105-8404 (JP); YOSHITOMI, Hiroki, Tokyo, 105-8404 (JP)
(74) Representative: Weickmann & Weickmann PartmbB

(57) **Abstract**

Provided is a lamp body that improves visibility while suppressing enlargement while improving steering stability.

A lamp body is a lamp body (40) in which a first light source (51), a second light source (52), and a third light source (53) that emit light as a high beam or a low beam are surrounded by a base member (41) and an outer lens (45), in which a gap (46) spaced in a left-right direction of the lamp body (40) is formed at a central portion of the lamp body (40) in the left-right direction, the first light source (51) and the third light source (53) emit light as one of a high beam or a low beam, the second light source (52) emits light as the other of a high beam or a low beam, the first light source (51), the second light source (52), and the third light source (53) are arranged in this order from an outside of the lamp body (40) in the left-right direction in front view of the lamp body (40), and the third light source (53) is provided between the gap (46) and the second light source (52).

## Description

### BACKGROUND

### Technical Field

The present invention relates to a lamp body.

### Related Art

Conventionally, headlamps having high beam, low beam, and DRL functions are known (for example, see JP 2021-130395 A).

The headlight of JP 2021-130395 A has a smoothly curved front surface, and includes a high beam light source and a low beam light source therein. The light sources are arranged vertically, and the light emission status and an amount of light of the light sources are controlled according to the light emission in the high beam, the low beam, and the DRL.

### SUMMARY

However, when the high beam light source and the low beam light source are arranged vertically as in JP 2021-130395 A, the headlamps are likely to be enlarged in the vertical direction, and the traveling wind easily flows in the entire circumferential direction along the curved surface when hitting the front surface. Therefore, there is a problem that there is room for further improvement in steering stability. The lamp body also has a general problem of improving visibility.

The present invention has been made in view of the above circumstances, and an object thereof is to provide a lamp body capable of improving visibility while suppressing enlargement while improving steering stability.

In a lamp body in which a first light source, a second light source, and a third light source that emit light as a high beam or a low beam are surrounded by a base member and an outer lens, a gap spaced in a left-right direction is formed at a center portion of the lamp body in a left-right direction, the first light source and the third light source emit light as one of a high beam or a low beam, the second light source emits light as the other one of a high beam or a low beam, the first light source, the second light source, and the third light source are arranged in this order from an outer side of the lamp body in the left-right direction in a front view of the lamp body, and the third light source is provided between the gap and the second light source.

According to the present invention, it is possible to provide a lighting device that improves visibility while suppressing enlargement while improving steering stability.

### BRIEF DESCRIPTION OF DRAWINGS

FIG. 1 is a diagram illustrating a structure around a headlight of a saddle-ride vehicle;
FIG. 2 is a front view of the headlight;
FIG. 3 is a front view of the headlight from which an outer lens, an extension on the left side of the headlight, and an inner lens on the left side of the headlight are removed;
FIG. 4 is a cross-sectional view taken along line IV-IV in FIG. 2;
FIG. 5 is a cross-sectional view taken along line V-V of FIG. 2;
FIG. 6 is a cross-sectional view taken along line VI-VI of FIG. 2;
FIG. 7 is an enlarged view illustrating a periphery of an opening of a third lamp chamber; and
FIG. 8 is a front view of a headlight provided with an inner lens with respect to FIG. 3.

### DETAILED DESCRIPTION

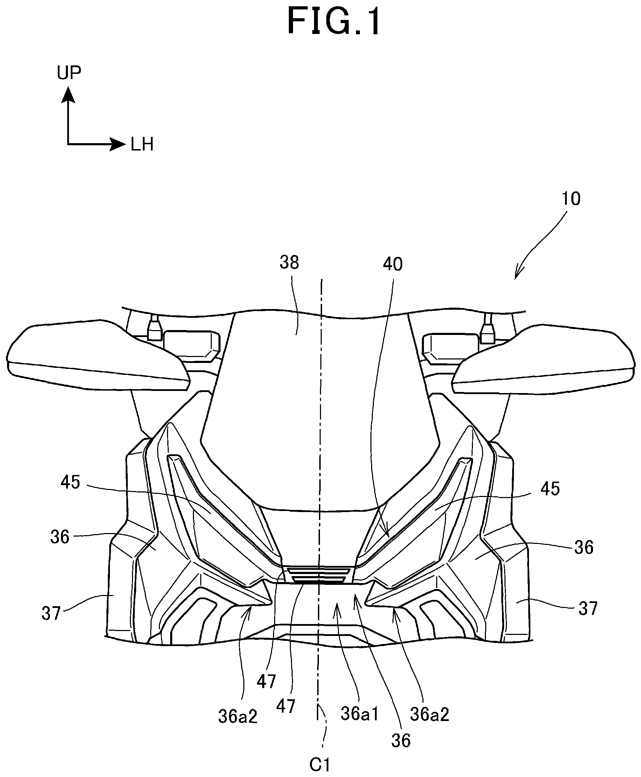

Embodiments of the present invention will be described below with reference to the drawings. In the description, directions such as front, rear, left, right, and up and down are the same as the directions with respect to the saddle-ride vehicle body in FIG. 1 unless otherwise specified. In addition, reference sign FR in each drawing indicates the front of the vehicle body, reference sign UP indicates the upper side of the vehicle body, and reference sign LH indicates the left side of the vehicle body.

### [Embodiment]

FIG. 1 is a diagram illustrating a structure around a headlight 40 of a saddle-ride vehicle 10.

The saddle-ride vehicle 10 is a vehicle including a vehicle body frame (not illustrated), a power unit (not illustrated) supported by the vehicle body frame, a front fork (not illustrated) that supports a front wheel (not illustrated) in a steerable manner, a swing arm (not illustrated) that supports a rear wheel (not illustrated), and a seat (not illustrated) for an occupant. The front fork is steerably supported by a head pipe of the vehicle body frame.

The vehicle body frame and the power unit are covered with a vehicle body cover. The vehicle body cover is supported by the vehicle body frame. The vehicle body cover includes a front cowl 36 that protects the front side and the front lateral side of the saddle-ride vehicle 10, and a middle cowl 37 that is disposed behind the front cowl 36 and covers the side of the saddle-ride vehicle 10.

A windscreen 38 is disposed above the front cowl 36.

An opening 36a is formed in a front surface portion of the front cowl 36. In the present embodiment, the opening 36a includes an intake port 36a1 for taking in traveling wind to the back surface of the front cowl 36, and a lens port 36a2 through which an outer lens 45 of the headlight (lamp body) 40 is exposed.

The headlight 40 is fixed to the vehicle body frame via a stay (not illustrated).

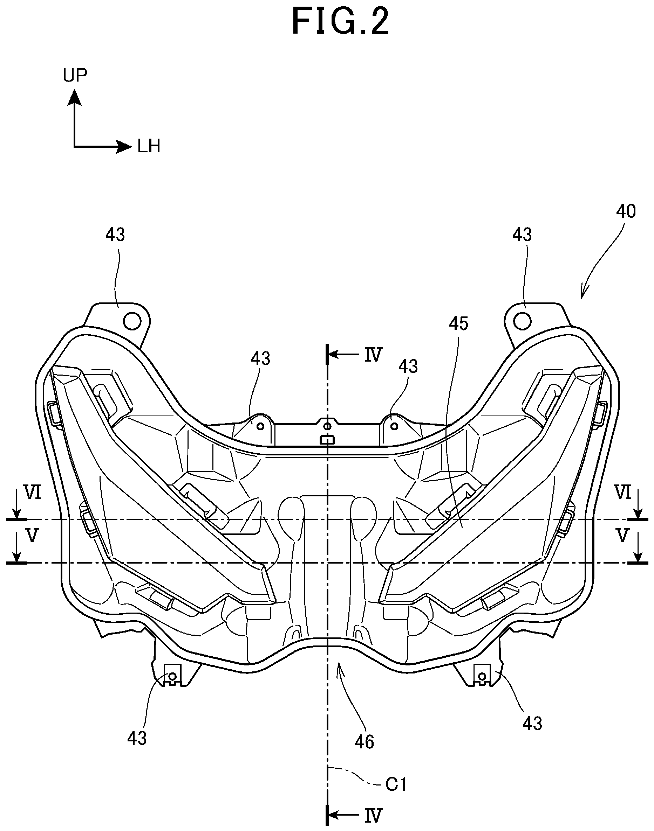

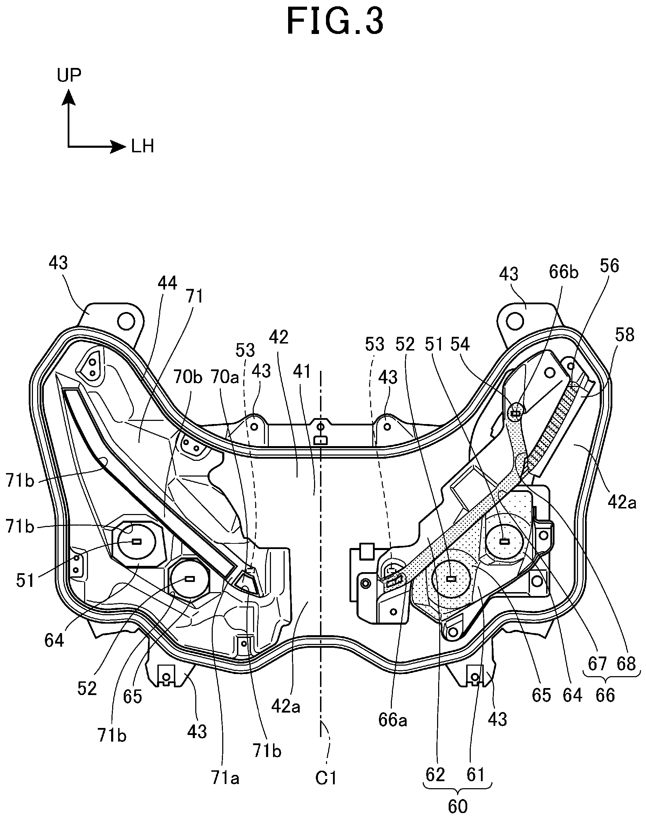

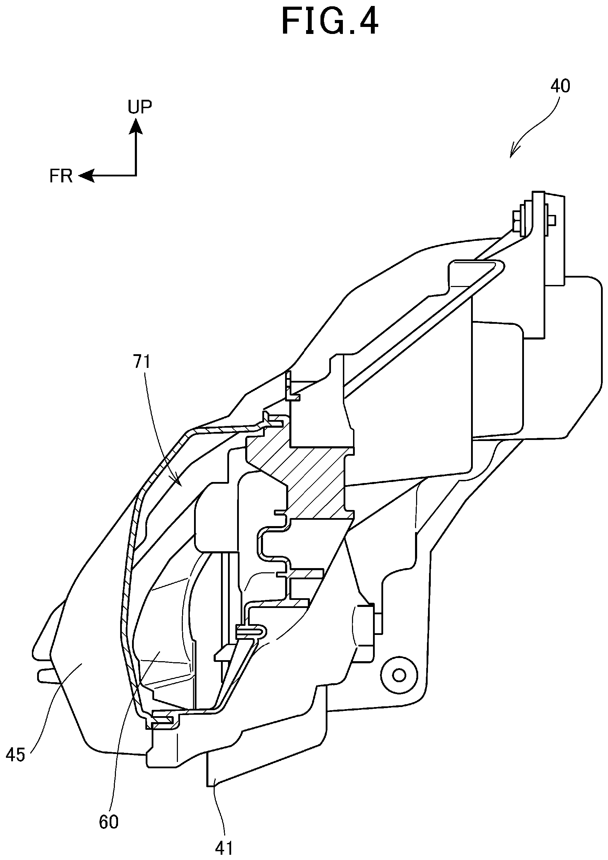

FIG. 2 is a front view of the headlight 40. FIG. 3 is a front view of the headlight 40 from which the outer lens 45, an extension 71 on the left side, and an inner lens on the left side are removed. FIG. 4 is a cross-sectional view taken along line IV-IV in FIG. 2.

The headlight 40 extends rearward and upward from the central portion in the left-right direction of the saddle-ride vehicle 10, in other words, from a lamp body left-right center line C1 as proceeding in the left-right direction. The headlight 40 is substantially symmetrical with respect to the lamp body left-right center line C1.

The headlight 40 includes a base member 41 in which a first light source 51, a second light source 52, a third light source 53, a fourth light source 54 (see FIG. 3), and the like are disposed, and the outer lens 45 that covers a front surface of the base member 41.

The base member 41 forms a rear surface portion of the headlight 40. The base member 41 includes a base body portion 42 in which the light sources 51 to 54, a partition member 60 (see FIG. 3), and the extension 71 are arranged, and a fixing portion 43 of the base member 41.

The base body portion 42 includes a base member central portion 42a extending in the left-right direction and a base member end portion 42b curving and expanding backward and upward from both left and right ends of the base member central portion 42a.

The fixing portion 43 is formed on the outer periphery of the base body portion 42 in front view of the headlight 40. In the present embodiment, the fixing portions 43 are formed at four positions on the upper portion of the base member 41 and two positions on the lower portion of the base member 41. The fixing portion 43 is fixed to the vehicle body frame via a stay (not illustrated).

On the front surface of the base body portion 42, a fitting edge portion 44 is formed along the outer peripheral end of the base body portion 42. The outer peripheral portion of the outer lens 45 is fitted and attached to the fitting edge portion 44. Thus, the front surface of the base member 41 is covered with the outer lens 45. Therefore, the headlight 40 has an internal space surrounded by the base member 41 and the outer lens 45. The light sources 51 to 54 attached to the base member 41, the partition member 60, the extension 71, and the like are accommodated in the internal space.

The outer lens 45 is formed of a transparent member capable of transmitting light. The outer lens 45 extends rearward and upward as proceeding in the left-right direction from the lamp body left-right center line C1.

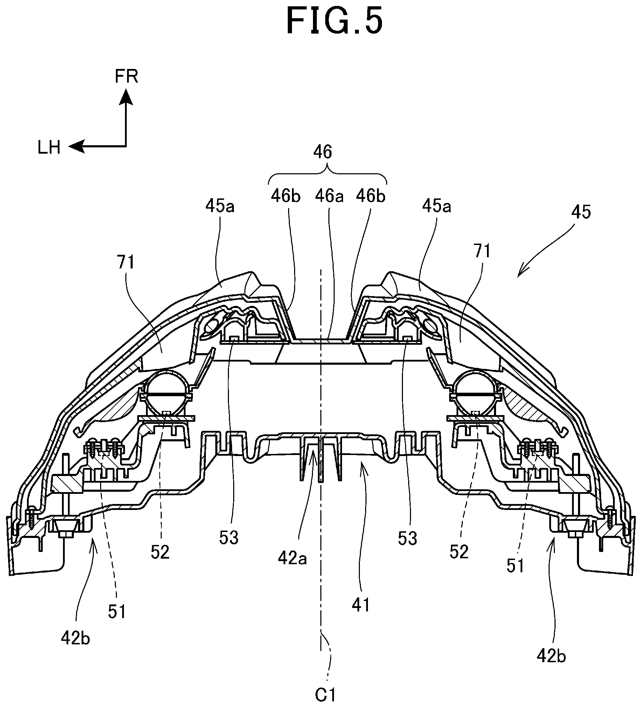

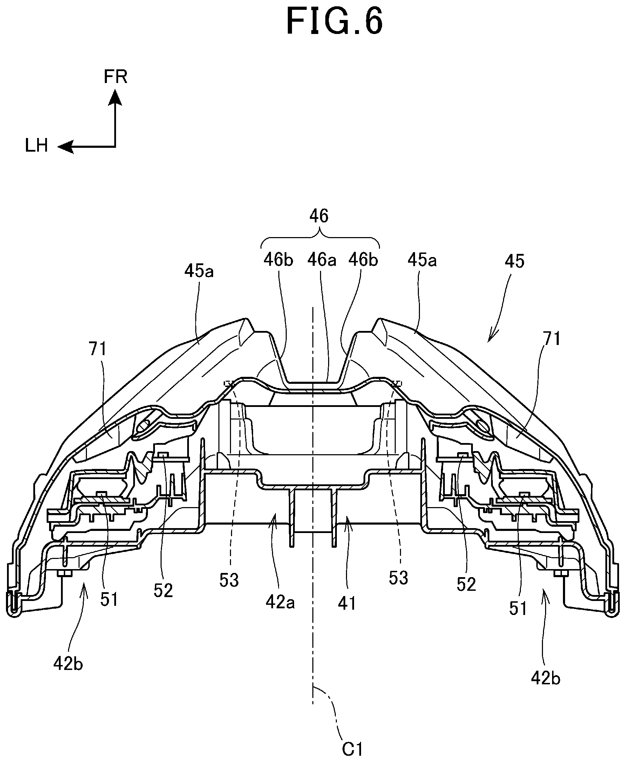

FIG. 5 is a cross-sectional view taken along line V-V of FIG. 2. FIG. 6 is a cross-sectional view taken along line VI-VI of FIG. 2.

The outer lens 45 includes a concave portion 46 whose central portion in the left-right direction is recessed rearward, and an outer lens front surface portion 45a extending outward in the left-right direction from both left and right ends of the concave portion 46.

The concave portion 46 is a substantially U-shaped recess. The concave portion 46 includes a concave rear surface portion (gap rear surface portion) 46a corresponding to a bottom surface having a recessed shape in top view, and a concave side surface portion (gap side surface portion) 46b extending forward from both left and right ends of the concave rear surface portion 46a. The concave side surface portion 46b is connected to the end portion of the outer lens front surface portion 45a on the side of the lamp body left-right center line C1.

In the present embodiment, as illustrated in FIG. 1, the concave portion 46 is covered with the front cowl 36 in vehicle front view. A part of the concave portion 46 is provided at a position overlapping the intake port 36a1 in vehicle front view. In other words, a part of the concave portion 46 is visually recognized from the front through the intake port 36a1. Thus, an air guide passage 47 is formed by the concave portion 46 and the front cowl 36. Therefore, when the saddle-ride vehicle 10 travels, the traveling wind enters from the intake port 36a1 and is guided to the rear of the saddle-ride vehicle 10 along the air guide passage 47. Therefore, in the periphery of the headlight 40, the flow of the traveling wind can be further stabilized, and the steering stability of the saddle-ride vehicle 10 can be further improved.

As illustrated in FIG. 3, the headlight 40 includes a plurality of light sources 51 to 54 attached to the base member 41 and the partition member 60 forming lamp chambers 64 to 66 in which the light sources 51 to 54 are accommodated.

A pair of right and left light sources 51 to 54 and partition members 60 is provided. The light sources 51 to 54 and the partition members 60 are arranged left-right symmetrically with respect to the lamp body left-right center line C1.

Hereinafter, description of the right side configuration of the headlight 40 will be omitted, and the left side configuration will be described.

In the present embodiment, the light sources 51 to 54 are light emitting diodes (LED).

Each of the light sources 51 to 54 is a light source that emits light as a high beam, a low beam, a position light, or a daytime running light (DRL). The light sources 51 to 53 are provided in the order of the first light source 51, the second light source 52, and the third light source 53 from the outside of the headlight 40 to the center of the headlight 40.

One of the first light source 51 and the second light source 52 is used as a high beam, and the other is used as a low beam. The third light source 53 is used as a high beam when the first light source 51 is a high beam, and is used as a low beam when the first light source 51 is a low beam. In the present embodiment, the first light source 51 and the third light source 53 are low-beam light sources, and the second light source 52 is a high-beam light source.

The base body portion 42 includes a fourth light source 54 which is a light source for DRL.

Therefore, hereinafter, the first light source 51 and the third light source 53 are referred to as an outer low beam light source 51 and an additional low beam light source 53, respectively. The second light source 52 is referred to as a high beam light source 52. The fourth light source 54 is referred to as a DRL light source 54.

In the present embodiment, the DRL light source 54 is disposed above the low beam light source 51 in a front view.

As illustrated in FIG. 5, in the present embodiment, the outer low beam light source 51 and the high beam light source 52 are disposed on the front surface side of the base member end portion 42b and behind the concave rear surface portion 46a in the front-rear direction.

The additional low beam light source 53 is disposed on both left and right sides of the concave portion 46 with respect to the center C1 of the headlight 40 in the left-right direction and in front of the base member central portion 42a. More specifically, the additional low beam light source 53 is disposed in front of the concave rear surface portion 46a of the concave portion 46 and behind the outer lens front surface portion 45a. As described above, by providing the additional low beam light source 53 on the front side of the concave rear surface portion 46a and on the rear side of the outer lens front surface portion 45a, the space of the headlight 40 can be effectively used, and the headlight 40 itself can be made more compact.

As illustrated in FIG. 3, the partition member 60 is provided in front of the light sources 51 to 54. In the present embodiment, the partition member 60 includes a first partition plate 61 and a second partition plate 62. The first partition plate 61 forms a first lamp chamber 64 accommodating the outer low beam light source 51 and a second lamp chamber 65 accommodating the high beam light source 52. The second partition plate 62 forms a third lamp chamber 66 accommodating the additional low beam light source 53 and the DRL light source 54. Light is emitted from the lamp chambers 64 to 66 in accordance with light emission of the accommodated light sources 51 to 54. The partition member 60 partitions the light sources 51 to 54 by the lamp chambers 64 to 66. Therefore, light emissions of the light sources 51 to 54 hardly interfere with each other.

The third lamp chamber 66 is a recess recessed toward the rear side of the headlight 40.

The third lamp chamber 66 includes a third lamp chamber straight portion 67 extending along the boundary between the first partition plate 61 and the second partition plate 62, and a third lamp chamber curved portion 68 extending from the other end side of the third lamp chamber straight portion 67 to the DRL light source 54.

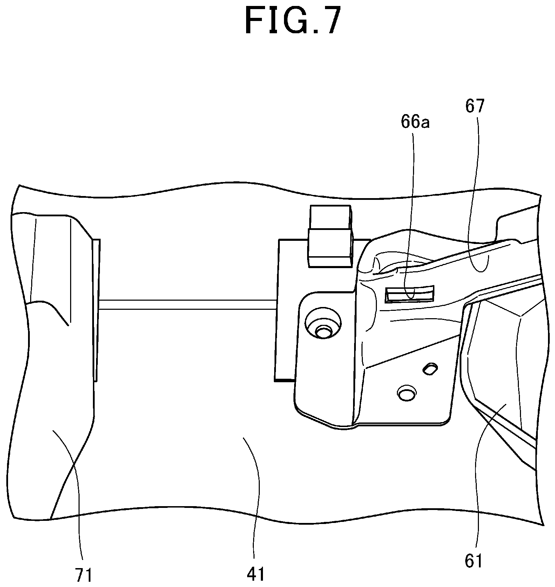

FIG. 7 is an enlarged view illustrating the periphery of an opening 66a of the third lamp chamber 66 as viewed from the front lower side of the headlight 40.

The third lamp chamber 66 has substantially rectangular openings at both ends in the longitudinal direction. The opening 66a is provided in front of the additional low beam light source 53. From the opening 66a, the light of the additional low beam light source 53 enters the third lamp chamber 66. An opening 66b is provided in front of the DRL light source 54. From the opening 66b (see FIG. 3), the light of the DRL light source 54 enters the third lamp chamber 66.

As illustrated in FIG. 3, a blinker unit 56 is disposed on the left of the DRL light source 54. The blinker unit 56 extends in the direction in which the third lamp chamber straight portion 67 extends.

The blinker unit 56 includes a blinker base portion in which the LED is disposed and a transparent blinker cover portion covering the blinker base portion. The blinker cover portion includes a bellows-like light reflecting portion 58.

In the blinker unit 56 of the present embodiment, four white and amber LEDs are disposed (not illustrated), and four LEDs of the same color are disposed at predetermined intervals in the extending direction. Therefore, the blinker unit 56 appears to emit light by emitting a part of the light reflected by the light reflecting portion 58 according to the light emission of the LED.

The blinker unit 56 is a position blinker that functions as a blinker and a DRL. That is, in the normal state, the blinker unit 56 functions as a DRL by causing the white LED to emit light. When the operator performs an operation of operating the blinker, the blinker unit 56 turns off the white LED and continuously performs light emission and light extinction of the amber LED. As a result, the blinker unit 56 functioning as the DRL also functions as a blinker.

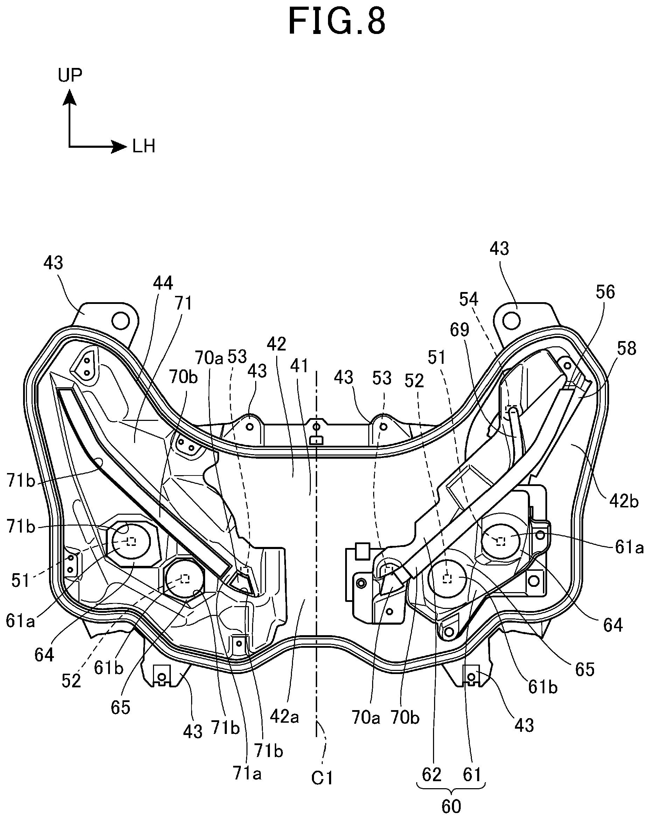

FIG. 8 is a front view of the headlight 40 provided with inner lenses 61a, 61b, 70a, and 70b with respect to FIG. 3.

The front of the first light source 51 is covered with a first inner lens 61a formed of a transparent member. The front of the second light source 52 is covered with a second inner lens 61b formed of a transparent member. The light of the first light source 51 and the second light source 52 is directly emitted via the inner lenses 61a and 61b.

A light guide member 69 made of a transparent resin is accommodated in the third lamp chamber 66.

The entire third lamp chamber 66 appears to emit light by the light emission of the additional low beam light source 53 or the DRL light source 54.

More specifically, when the additional low beam light source 53 and the DRL light source 54 emit light, the light enters the light guide member 69 through the openings 66a and 66b. The light incident on the light guide member 69 is guided to the entire third lamp chamber 66 by diffuse reflection, and a part of the diffusely reflected light is emitted to the outside of the third lamp chamber 66. Therefore, the entire third lamp chamber 66 appears to emit light.

The third lamp chamber 66 and the blinker unit 56 are covered with a third inner lens 70a and a fourth inner lens 70b formed of transparent members. The third inner lens 70a covers the front of the additional low beam light source 53 of the third lamp chamber 66. The fourth inner lens 70b covers most of the blinker unit 56 and the third lamp chamber straight portion 67. That is, the light of the additional low beam light source 53 and the DRL light source 54 is emitted via the light guide member 69 of the third lamp chamber 66 and the inner lenses 70a and 70b.

The extension 71 is disposed on the base member 41. The extension 71 is disposed so as to cover the partition member 60 and the blinker unit 56. The extension 71 has openings 71b corresponding to the positions of the first lamp chamber 64, the second lamp chamber 65, the third lamp chamber straight portion 67 of the third lamp chamber 66, and the blinker unit 56 in front view of the headlight 40. As a result, the light emitted from the lamp chambers 64 to 66 can be emitted to the outside of the headlight 40.

The extension 71 includes a light shielding portion 71a that partitions the third inner lens 70a and the fourth inner lens 70b. As a result, in the light emitted from the third lamp chamber 66, the light emitted from the third inner lens 70a and the light emitted from the fourth inner lens 70b are less likely to intersect with each other, and can be seen independently in front view of the headlight 40.

The third lamp chamber 66 appears to emit light due to diffuse reflection by the additional low beam light source 53 and the DRL light source 54.

In the present embodiment, when the additional low beam light source 53 is emitting light, the DRL light source 54 reduces the amount of light and emits light. Therefore, in the third lamp chamber, with the light shielding portion 71a as a boundary, the third inner lens 70a side emits light brightly, and the fourth inner lens 70b side emits light darker than the third inner lens 70a side.

That is, in the third lamp chamber 66, the third inner lens 70a side functions as a low beam. At the same time, the fourth inner lens 70b side of the third lamp chamber 66 functions as a position lamp by dimming of the DRL light source 54.

In addition, since the third lamp chamber 66 includes the additional low beam light source 53 and the DRL light source 54, even when either one of the light sources stops emitting light, either one of the light sources can make the third lamp chamber 66 appear to emit light.

As described above, in the present embodiment, the additional low beam light source 53 and the DRL light source 54 are made common to the third lamp chamber 66. Therefore, the predetermined light distribution can be achieved while making the headlight 40 more compact.

As described above, in the headlight 40, in the headlight 40 in which the outer low beam light source 51, the high beam light source 52, and the additional low beam light source 53 that emit light as a high beam or a low beam are surrounded by the base member 41 and the outer lens 45, the concave portion 46 spaced in the left-right direction is formed at the center portion of the headlight 40 in the left-right direction, the outer low beam light source 51 and the additional low beam light source 53 emit light as one of a high beam or a low beam, the high beam light source 52 emits light as the other of a high beam or a low beam, the outer low beam light source 51, the high beam light source 52, and the additional low beam light source 53 are arranged in this order from the outside in the left-right direction of the headlight 40 in front view of the headlight 40, and the additional low beam light source 53 is provided between the concave portion 46 and the high beam light source 52.

According to this configuration, by providing the concave portion 46 through which the traveling wind passes in the central portion of the headlight 40, the steering stability can be further improved, and by providing the additional low beam light source 53 that emits light as the same role as the outer low beam light source 51 between the high beam light source 52 and the concave portion 46, while suppressing the enlargement of the headlight 40 such as arranging the outer low beam light source 51 and the high beam light source 52 vertically in order to emit light as the role of the outer low beam light source 51 in the left-right center direction, the additional low beam light source 53 as the same role as the outer low beam light source 51 can be arranged, thereby expanding the irradiation range of the low beam and further improving the visibility.

The concave portion 46 is formed in a surrounding shape of at least the concave rear surface portion 46a and the concave side surface portions 46b on both left and right sides of the concave rear surface portion 46a, and the additional low beam light source 53 is provided on the front side of the headlight 40 with respect to the concave rear surface portion 46a and on the rear side of the headlight 40 with respect to the front surface of the outer lens 45 in top view of the headlight 40.

According to this configuration, by providing the additional low beam light source 53 in front of the concave rear surface portion 46a and behind the front surface of the outer lens 45, the space of the headlight 40 can be effectively utilized to dispose the additional low beam light source 53 while providing the concave portion 46 in the central portion of the headlight 40, and even if the concave portion 46 and the additional low beam light source 53 are provided, the headlight 40 itself can be made more compact.

The lamp body further includes a partition member 60 that forms the first lamp chamber 64, the second lamp chamber 65, and the third lamp chamber 66, and a DRL light source 54 that emits light as a DRL. Light from the outer low beam light source 51 is emitted from the first lamp chamber 64, light from the high beam light source 52 is emitted from the second lamp chamber 65, and light from the additional low beam light source 53 and the DRL light source 54 are emitted from the third lamp chamber 66.

According to this configuration, by commonizing the lamp chamber of the DRL light source 54 that emits light as the DRL and the lamp chamber of the additional low beam light source 53, it is not necessary to separately provide the lamp chamber of the additional low beam light source 53, and it is possible to achieve a predetermined light distribution while making the headlight 40 more compact.

When the additional low beam light source 53 is emitting light, the DRL light source 54 emits light with an amount of light lower than a predetermined amount of light. The third lamp chamber 66 extends at least vertically or horizontally of the headlight 40 and has openings 66a and 66b at both ends in an extending direction. The light of the additional low beam light source 53 is emitted from the opening 66a on one end side, and the light of the DRL light source 54 is emitted from the opening 66b on the other end side.

According to this configuration, since the additional low beam light source 53 is located on one end side of the third lamp chamber 66 and the DRL light source 54 is located on the other end side, even when the amount of light of the DRL light source 54 decreases, it is possible to make the entire third lamp chamber 66 appear to emit light without providing an additional light source.

### [Other Embodiments]

The embodiments described above are merely an aspect of the present invention, and can be arbitrarily modified and applied within a scope not departing from the spirit of the present invention.

In the above-described embodiment, an example of the headlight provided in the saddle-ride vehicle has been described. However, the present invention is not limited thereto, and a headlight provided in a four-wheeled automobile or the like may be used.

Furthermore, in the above-described embodiment, an example in which an LED is used as each of the light sources 51 to 54 has been described. However, the type of the light source is not limited thereto, and a known light source can be used. For example, the light source may be a point light source other than the LED, a bulb light source, or a surface light source that emits planar light by densely arranging a plurality of light emitting elements.

In the above-described embodiment, the third lamp chamber 66 appears to reflect light by the light guide member 69 and emit light as a DRL and a low beam. In addition, the blinker unit 56 appeared to reflect light at the light reflecting portion 58 and emit light as a DRL and a blinker. However, a direct type in which the light of the light source is directly emitted without interposing the light guide member, the reflector, or the like may be used.

In addition, the low beam by the first light source and the high beam by the second light source were of a direct type in which the light of the light source was directly emitted. However, light may be emitted via a light guide member, a reflector, or the like.

### [Configurations supported by above embodiment]

The above embodiment supports the following configurations.

(Configuration 1) A lamp body in which a first light source, a second light source, and a third light source that emit light as a high beam or a low beam are surrounded by a base member and an outer lens, in which a gap spaced in a left-right direction of the lamp body is formed at a center portion of the lamp body in the left-right direction, the first light source and the third light source emit light as one of a high beam or a low beam, the second light source emits light as the other of a high beam or a low beam, the first light source, the second light source, and the third light source are arranged in this order from an outer side of the lamp body in the left-right direction in front view of the lamp body, and the third light source is provided between the gap and the second light source.

According to this configuration, by providing the gap through which the traveling wind passes in the central portion of the lamp body, the steering stability can be further improved, and by providing the third light source that emits light as the same role as the first light source between the second light source and the gap, while suppressing the enlargement of the lamp body such as arranging the first light source and the second light source vertically in order to emit light as the role of the first light source in the left-right center direction, the irradiation range can be expanded by arranging the light source as the same role as the first light source, and the visibility can be further improved. Therefore, according to this configuration, it is possible to provide a lamp body that improves visibility while suppressing enlargement while improving steering stability.

(Configuration 2) The lamp body according to Configuration 1, in which the gap is configured by a surrounding shape of at least a gap rear surface portion and gap side surface portions on both left and right sides of the gap rear surface portion, and in top view of the lamp body, the third light source is provided in front of the lamp body with respect to the gap rear surface portion and behind the lamp body with respect to the front surface of the outer lens.

According to this configuration, by providing the third light source in front of the gap rear surface and behind the front surface of the outer lens, the space of the lamp body can be effectively used to dispose the third light source while providing the gap in the central portion of the lamp body, and even if the gap and the third light source are provided, the lamp body itself can be made more compact.

(Configuration 3) The lamp body according to Configuration 1 or 2, further including: a partition member that forms a first lamp chamber, a second lamp chamber, and a third lamp chamber; and a fourth light source that emits light as a DRL, in which light from the first light source is emitted from the first lamp chamber, light from the second light source is emitted from the second lamp chamber, and light from the third light source and the fourth light source is emitted from the third lamp chamber.

According to this configuration, by commonizing the lamp chamber of the fourth light source and the lamp chamber of the third light source that emit light as the DRL, it is not necessary to separately provide the lamp chamber of the third light source, and a predetermined light distribution can be achieved while making the lamp body more compact.

(Configuration 4) The lamp body according to Configuration 3, in which the fourth light source emits light with an amount of light lower than a predetermined amount of light when the third light source emits light, and the third lamp chamber extends at least vertically or horizontally of the lamp body and has openings at both ends in an extending direction, the light of the third light source is emitted from the opening on one end side, and the light of the fourth light source is emitted from the opening on the other end side.

According to this configuration, since the third light source is located on one end side of the third lamp chamber and the fourth light source is located on the other end side of the third lamp chamber, even when the amount of light of the fourth light source decreases, it is possible to make the entire third lamp chamber appear to emit light without providing an additional light source. Provided is a lamp body that improves visibility while suppressing enlargement while improving steering stability.

A lamp body is a lamp body (40) in which a first light source (51), a second light source (52), and a third light source (53) that emit light as a high beam or a low beam are surrounded by a base member (41) and an outer lens (45), in which a gap (46) spaced in a left-right direction of the lamp body (40) is formed at a central portion of the lamp body (40) in the left-right direction, the first light source (51) and the third light source (53) emit light as one of a high beam or a low beam, the second light source (52) emits light as the other of a high beam or a low beam, the first light source (51), the second light source (52), and the third light source (53) are arranged in this order from an outside of the lamp body (40) in the left-right direction in front view of the lamp body (40), and the third light source (53) is provided between the gap (46) and the second light source (52).

### Reference Signs List

- 40: headlight (lamp body)
- 41: base member
- 45: outer lens
- 46: concave portion (gap)
- 46a: concave rear surface portion (gap rear surface portion)
- 46b: concave side surface portion (gap side surface portion)
- 50: light source
- 51: outer low beam light source (first light source)
- 52: high beam light source (second light source)
- 53: additional low beam light source (third light source)
- 54: DRL light source (fourth light source)
- 60: partition member
- 64: first lamp chamber
- 65: second lamp chamber
- 66: third lamp chamber
- 66a: opening
- 66b: opening

## Claims

1. A lamp body (40) in which a first light source (51), a second light source (52), and a third light source (53) that emit light as a high beam or a low beam are surrounded by a base member (41) and an outer lens (45), **characterized in that**
a gap (46) spaced in a left-right direction of the lamp body is formed at a central portion of the lamp body (40) in the left-right direction,
the first light source (51) and the third light source (53) emit light as one of a high beam or a low beam,
the second light source (52) emits light as the other of a high beam or a low beam,
the first light source (51), the second light source (52), and the third light source (53) are arranged in this order from an outside of the lamp body (40) in the left-right direction in front view of the lamp body (40), and
the third light source (53) is provided between the gap (46) and the second light source (52).

2. The lamp body according to claim 1, wherein
the gap (46) is configured in a surrounding shape of at least a gap rear surface portion (46a) and gap side surface portions (46b) on both left and right sides of the gap rear surface portion (46a), and
in top view of the lamp body (40), the third light source (53) is provided in front of the lamp body (40) with respect to the gap rear surface portion (46a) and behind the lamp body with respect to the front surface of the outer lens (45).

3. The lamp body according to claim 1, further comprising a partition member (60) that forms a first lamp chamber (64), a second lamp chamber (65), and a third lamp chamber (66), and a fourth light source (54) that emits light as a DRL, wherein
light from the first light source (51) is emitted from the first lamp chamber (64),
light from the second light source (52) is emitted from the second lamp chamber (65), and
light from the third light source (53) and the fourth light source (54) is emitted from the third lamp chamber (66).

4. The lamp body according to claim 3, wherein
the fourth light source (54) emits light with an amount of light smaller than a predetermined amount of light when the third light source (53) emits light,
the third lamp chamber (66) extends at least vertically or horizontally of the lamp body (40), and has openings (66a, 66b) at both ends in an extending direction, and
the light of the third light source (53) is emitted from the opening (66a) on one end side, and the light of the fourth light source (54) is emitted from the opening (66b) on the other end side.
